# DEMANDE DE BREVET EUROPEEN

(11) **EP 1 361 124 A1**
(43) Date de publication de la demande: **12.11.2003**
(21) Numéro de dépôt: 03008780.3
(22) Date de dépôt: 22.04.2003
(51) Int. Cl.: B60T 1/12

(54) **Dispositif électrique de frein de parking**

(30) Priorité: 03.05.2002 FR 0205663
(71) Demandeur: Conception et Développement Michelin S.A., 1762 Givisiez (CH)
(72) Inventeur: Laurent, Daniel, 1723 Marly (CH)
(74) Mandataire: Bauvir, Jacques

(57) **Abrégé**

Dispositif de frein de parking pour véhicule dont au moins deux roues (2) d'un même essieu sont directrices et dont l'angle de braquage est imposé sélectivement sur chacune des roues directrices par un actionneur électrique (3) dédié, chacun des actionneurs électriques étant piloté par une unité de contrôle (4) de direction déterminant pour chacune des roues directrices un angle de braquage en fonction au moins d'un signal délivré par un organe de commande de trajectoire du véhicule, comportant un organe de commande (5) de frein de parking délivrant un ordre de verrouillage de frein de parking à l'unité de contrôle, l'unité de contrôle, envoyant à chacune desdites deux roues du même essieu des angles de consigne de braquage antagonistes lorsqu'elle reçoit un ordre de verrouillage de frein de parking.

## Description

La présente invention se rapporte aux freins de parking pour véhicules automobiles routiers.

Dans l'état actuel de la technique, il se développe de plus en plus des moyens de commande électrique pour l'ensemble des actionneurs d'un véhicule automobile routier, et notamment la direction. Cette technologie est connue sous l'appellation anglo-saxonne « steer by wire ». Cela consiste à substituer à la commande mécanique, assistée ou non, existant entre le volant et les roues directrices, une chaîne de commande électrique dépourvue de liaison mécanique entre le volant et les roues directrices.

L'avantage de cette technologie est qu'elle se marie de façon idéale avec les progrès de l'électronique, qui permettent des asservissements de plus en plus sophistiqués et qui permettent de placer le braquage des roues non seulement sous le contrôle de la commande manuelle mais aussi sous le contrôle d'un système de sécurité et/ou un système d'optimisation de la dynamique du véhicule. Ainsi par exemple, on peut imprimer aux roues directrices un angle qui tient non seulement compte de la commande du conducteur du véhicule, mais qui tient également compte de paramètres dynamiques observés automatiquement sur le véhicule.

La demande de brevet EP 1 125 826 propose d'utiliser un système de commande de braquage individuel des roues d'un véhicule par voie électrique pour installer une fonction de secours palliant la défaillance du frein principal, capable de ralentir le véhicule en braquant les roues d'un même essieu en sens opposés l'une par rapport à l'autre. Ce type de frein de secours risque cependant de poser des problèmes de comportement au véhicule sur sol non uniformément plan et/ou non uniformément adhérent.

La présente invention propose profiter de l'existence d'actionneurs individuels, par exemple électriques, capables de braquer sélectivement chacune des roues directrices pour implanter un frein de parking que l'on actionne normalement seulement à l'arrêt du véhicule.

L'invention propose un dispositif de frein de parking pour véhicule routier dont au moins deux roues d'un même essieu sont directrices et dont l'angle de braquage est imposé sélectivement sur chacune des roues directrices par un actionneur dédié, chacun des actionneurs étant piloté par une unité de contrôle de direction déterminant pour chacune des roues directrices un angle de braquage en fonction au moins d'un signal délivré par un organe de commande de trajectoire du véhicule, caractérisé en ce qu'il comporte un organe de commande de frein de parking délivrant un ordre de verrouillage de frein de parking à l'unité de contrôle, et en ce que l'unité de contrôle, lorsqu'elle reçoit un ordre de verrouillage de frein de parking, envoie à au moins une roue directrice une consigne de braquage de façon à créer une incompatibilité de déplacement.

L'incompatibilité de déplacement est réalisée par exemple en braquant une seule roue, n'importe laquelle, d'un véhicule à quatre roue. S'il s'agit d'un véhicule à trois roues dont deux sur un essieu, l'incompatibilité de déplacement est réalisée par exemple en braquant une seule roue de l'essieu. On donne ci-dessous quelques exemples plus en détails. Cependant, l'homme du métier saura très aisément réaliser cette incompatibilité de déplacement par un braquage judicieux des roues, et se rendra compte l'immobilisation est plus ou moins ferme selon les schémas de braquage.

Cela permet d'obtenir un frein de parking sans installer de pièce mécanique dédiée à cette fonction, dans les roues ou en liaison avec les disques de freins ou les étriers de freins. Les éléments à installer sont un moyen de commande quelconque, par exemple un bouton de commande, et une programmation adéquate dans l'unité de contrôle de direction. La fonction de frein de parking est assurée uniquement comme décrit. Cela contribue à l'allégement du véhicule. De préférence, on interdit automatiquement l'activation de cette fonction « frein de parking » dès que le véhicule se déplace, par exemple au dessus d'un seuil de vitesse très faible, proche de zéro.

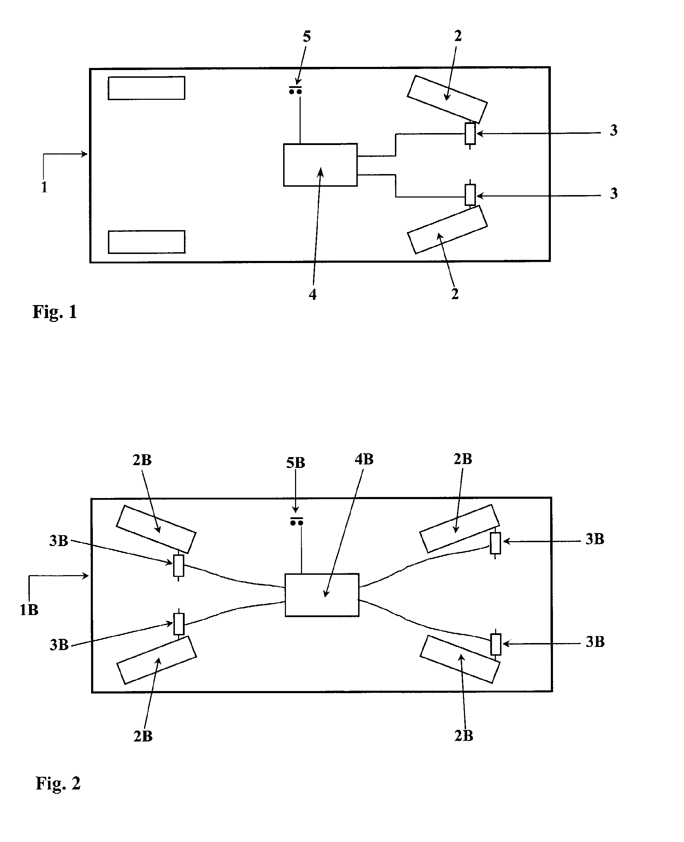

Le dispositif de commande de l'invention décrit ci-dessous illustre une application non limitative de l'invention utilisant des actionneurs électriques pour commander le braquage des roues directrices d'un véhicule de tourisme à quatre roues. Bien entendu, on pourrait utiliser d'autres types d'actionneurs, par exemple des vérins hydrauliques ou des organes purement mécaniques. On consultera les figures suivantes, sur lesquels :
■ la figure 1 montre un dispositif de frein de parking installé sur un véhicule à deux roues directrices ;
■ la figure 2 montre un dispositif de frein de parking installé sur un véhicule à quatre roues directrices.

A la figure 1, on voit un véhicule 1 à quatre roues, dont l'essieu avant comporte deux roues directrices 2. Chaque roue directrice 2 est braquée par un actionneur électrique 3 relié d'une part à la caisse ou au châssis du véhicule 1 et d'autre part à un porte-roue (non visible), pour commander l'angle de braquage de la roue 2. Une unité de contrôle 4 permet de piloter le braquage des roues directrices, en fonction de divers paramètres, dont bien entendu un volant ou un organe équivalent. L'unité de contrôle 4 est chargé des programmes adéquats pour effectuer à chaque instant le calcul d'un angle de braquage approprié par chacune des roues directrices, et pilote l'actionneur électrique 3 de chacune des roues directrices 2.

On voit un bouton de commande 5 du frein de parking. Lorsque l'on bascule le bouton de commande 5 dans la position « parking », l'unité de contrôle 4 ignore lesdits paramètres divers ; elle bascule d'un mode « déplacement » à un mode « parking » et envoie aux actionneurs électriques 3 des consignes d'angles de braquage antagonistes à chacune des deux roues d'un même essieu. Par exemple, l'unité de contrôle 4 braque la roue avant gauche à l'angle de braquage à droite maximal, et braque la roue avant droite à l'angle de braquage à gauche maximal. Le véhicule prend la configuration représentée à la figure 1. Lorsque l'on bascule le bouton de commande 5 dans la position « marche normale », l'unité de contrôle 4 reprend son mode de fonctionnement pour piloter le braquage des roues directrices, en fonction de divers paramètres, dont bien entendu un volant ou un organe équivalent.

A la figure 2, on voit un véhicule 1B à quatre roues 2B groupées en deux essieux, toutes les roues 2B étant directrices. De façon analogue, chaque roue directrice 2B est braquée par un actionneur électrique 3B. Une unité de contrôle 4B permet de piloter le braquage de toutes les roues. On voit un bouton de commande 5B du frein de parking. Lorsque l'on bascule le bouton de commande 5B dans la position « parking », l'unité de contrôle 4B envoie aux actionneurs électriques 3B des consignes d'angles de braquage spécifiques de la position parking, par exemple au moins deux valeurs antagonistes sur au moins un essieu.

De préférence, l'unité de contrôle 4B envoie à chacune des deux roues 2B des deux essieux des angles de consigne de braquage antagonistes. Dans ce cas, il est avantageux que les consignes de braquage de chacune des roues latérales d'un même côté soient antagonistes. L'immobilisation du véhicule est meilleure encore si l'unité de contrôle 4B braque la roue avant gauche à l'angle de braquage à gauche maximal, braque la roue avant droite à l'angle de braquage à droite maximal, braque la roue arrière gauche à l'angle de braquage à droite maximal, et braque la roue arrière droite à l'angle de braquage à gauche maximal. Le véhicule prend la configuration représentée à la figure 2.

Un autre façon avantageuse de créer une incompatibilité de déplacement, sur un véhicule à quatre roues toutes directrices, est la suivante, fort utile pour un stationnement le long d'un trottoir. L'unité de contrôle, lorsqu'elle reçoit un ordre de frein de parking, envoie aux roues d'un côté, le côté opposé au trottoir, une consigne de braquage, par exemple en sens opposés, tout en laissant les roues de l'autre côté en ligne droite, donc du côté du trottoir.

En variante, le bouton de commande 5 du frein de parking peut être remplacé par un dispositif automatique qui, lorsqu'il constate une situation où il convient de maintenir le véhicule immobile, par exemple lorsque que la vitesse du véhicule est nulle depuis un temps prédéterminé, ou lorsque le conducteur arrête le fonctionnement du véhicule, envoie à l'unité de contrôle un ordre d'actionnement du frein de parking, et lorsqu'il constate une situation où il convient de libérer l'immobilisation du véhicule, par exemple lorsque que le conducteur accélère, envoie à l'unité de contrôle un ordre de libération du frein de parking. Bien entendu, la libération peut être progressive, et par exemple coordonnée avec par exemple la demande d'accélération.

Soulignons encore que le dispositif de frein de parking selon l'invention offre en même temps une fonction antivol efficace, dans la mesure où sa libération nécessite manifestement d'être autorisé à actionner le véhicule, c'est à dire par exemple à disposer de sa clef de contact.

## Revendications

1. Dispositif de frein de parking pour véhicule routier dont au moins deux roues (2) d'un même essieu sont directrices et dont l'angle de braquage est imposé sélectivement sur chacune des roues directrices par un actionneur (3) dédié, chacun des actionneurs étant piloté par une unité de contrôle (4) de direction déterminant pour chacune des roues directrices un angle de braquage en fonction au moins d'un signal délivré par un organe de commande de trajectoire du véhicule, **caractérisé en ce qu'**il comporte un organe de commande (5) de frein de parking délivrant un ordre de verrouillage de frein de parking à l'unité de contrôle, et **en ce que** l'unité de contrôle, lorsqu'elle reçoit un ordre de verrouillage de frein de parking, envoie à au moins une roue directrice une consigne de braquage de façon à créer une incompatibilité de déplacement.

2. Dispositif selon la revendication 1 dans lequel l'unité de contrôle, lorsqu'elle reçoit un ordre de verrouillage de frein de parking, envoie aux actionneurs (3) des consignes d'angles de braquage antagonistes à chacune des deux roues d'un même essieu.

3. Dispositif selon la revendication 1, pour véhicule à quatre roues toutes directrices, dans lequel l'unité de contrôle, lorsqu'elle reçoit un ordre de frein de parking, envoie aux actionneurs de chacune des deux roues (2B) des deux essieux des angles de consigne de braquage antagonistes.

4. Dispositif selon la revendication 1, pour véhicule à quatre roues toutes directrices, dans lequel l'unité de contrôle, lorsqu'elle reçoit un ordre de frein de parking, envoie aux actionneurs des roues d'un côté une consigne de braquage tout en laissant les roues de l'autre côté en ligne droite.

5. Dispositif selon la revendication 3, dans lequel l'unité de contrôle, lorsqu'elle reçoit un ordre de frein de parking, envoie aux actionneurs de chacune des roues latérales d'un même côté des angles de consigne de braquage antagonistes.

6. Dispositif selon la revendication 5 dans lequel, lorsqu'elle reçoit un ordre de frein de parking, l'unité de contrôle braque la roue avant gauche à l'angle de braquage à gauche maximal, braque la roue avant droite à l'angle de braquage à droite maximal, braque la roue arrière gauche à l'angle de braquage à droite maximal, et braque la roue arrière droite à l'angle de braquage à gauche maximal.

7. Dispositif selon l'une quelconque des revendications précédentes, dans lequel l'actionneur est électrique.
